(19) Europäisches Patentamt
European Patent Office
Office européen des brevets

(11) **EP 3 148 190 A1**

(12) **EUROPEAN PATENT APPLICATION**

(43) Date of publication:
**29.03.2017 Bulletin 2017/13**

(51) Int Cl.:
*H04N 19/105* (2014.01)   *H04N 19/176* (2014.01)
*H04N 19/61* (2014.01)   *H04N 19/593* (2014.01)
*H04N 19/136* (2014.01)   *H04N 19/157* (2014.01)
*H04N 19/182* (2014.01)

(21) Application number: **15306496.9**

(22) Date of filing: **25.09.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Thomson Licensing
92130 Issy-les-Moulineaux (FR)**

(72) Inventors:
• **RACAPE, Fabien
35576 Cesson-Sévigné (FR)**

• **GALPIN, Franck
35576 Cesson-Sévigné (FR)**
• **LELEANNEC, Fabrice
35576 Cesson-Sévigné (FR)**
• **POIRIER, Tangi
35576 Cesson-Sévigné (FR)**
• **QIAO, Yu
35576 Cesson-Sévigné (FR)**

(74) Representative: **Huchet, Anne
TECHNICOLOR
1-5, rue Jeanne d'Arc
92130 Issy-les-Moulineaux (FR)**

(54) **METHOD AND APPARATUS FOR INTRA PREDICTION IN VIDEO ENCODING AND DECODING**

(57)     A method and an apparatus for video encoding and decoding, and more particularly, a method and an apparatus for performing intra prediction using reference sample portion having a thickness of at least two pixels and intra prediction modes based on such reference sample portion The intra-prediction mode may specify a direction and a propagation model for determining the manner of propagating samples in the prediction block. Using a reference sample portion having a thickness of at least two pixels allows the variations in the pixel values to be used in propagating the samples in the prediction block.

*FIG. 6*

**Description**

TECHNICAL FIELD

This invention relates to a method and an apparatus for video encoding and decoding, and more particularly, to a method and an apparatus for performing intra prediction using reference sample portion having a thickness of at least two pixels and intra prediction modes based on such reference sample portion.

BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

In Video Compression standards like H.264/AVC [1], H.265/HEVC [2], or VP9 [3], the encoding and decoding process contains three main steps: prediction, transform, and coding. The present principles are directed to the prediction step, which uses previously decoded/reconstructed information to decrease the redundancies in the source signal. Two main types of prediction coexist in video compression: inter prediction, which uses information from previously decoded/reconstructed frames, and intra prediction, which propagates, for each component, neighboring pixels to a current block (or Prediction Block, PB). In intra prediction the so-called reference samples used for the prediction are located in a one pixel thick L-shape boundary around the Prediction Block (the block to be filled in). The sample values are then used to predict the current block ("Prediction Block") following an intra prediction process: that is, directional, DC, planar, etc.

SUMMARY

According to an aspect of the present principles, novel intra-prediction modes are based on a reference sample layer that surrounds the prediction block, wherein the reference sample layer is more than one pixel in width. The intra-prediction modes may specify a direction for propagating the samples in the prediction block. The intra-prediction mode may also specify a propagation model for propagating samples in the prediction block and lie along a path corresponding to the specified direction.

An embodiment of the present principles provides a method of decoding a picture, comprising: accessing a bitstream including a prediction block in the picture to be decoded and data indicative of an intra-prediction mode associated with the prediction block; accessing a reference sample layer around the prediction block in the picture to be decoded, the reference sample layer having a sample width of at least two pixels; and generating pixels within the prediction block based on the intra-prediction mode associated with the prediction block.

In accordance with the present principles, the intra-prediction mode specifies a direction wherein a path of prediction along the direction includes at least two pixels in the reference sample layer.

In accordance with the present principles the intra-prediction mode further specifies a propagation mode wherein the propagation mode includes at least one of average value, linear model, and a higher order model along the specified direction.

In accordance with the present principles the intra-prediction mode is based on one of Bresenham and Wu algorithms.

In accordance with the present principles the reference sample layer has a width corresponding to a width of a smallest block in a video compression standard.

An embodiment of the present principles provides an apparatus for decoding a picture including a processor configured to implement the steps and the features described above.

An embodiment of the present principles provides a method of encoding a picture, comprising: accessing a block in the picture to be intra-prediction encoded; selecting an intra-prediction mode for the block based on pixels in the reference sample layer, the intra-prediction being performed using a reference sample layer around the block that is at least two pixels in width; and generating a bitstream including the encoded picture and data indicative of the selected intra-prediction mode.

The method of claim 6, wherein the selected intra-prediction mode specifies a direction wherein a path of prediction along the direction includes at least two pixels in the reference sample layer.

In accordance with the present principles the selected intra-prediction mode specifies a propagation mode including one of average value, linear model and higher order model along the specified direction.

In accordance with the present principles the intra-prediction mode is based on one of Bresenham and Wu algorithms.

In accordance with the present principles the reference sample layer has a width corresponding to a width of a smallest block in a video compression standard.

An embodiment of the present principles provides an apparatus for encoding a picture including a processor configured to implement the steps and the features described above.

BRIEF DESCRIPTION OF THE DRAWINGS

The above-mentioned and other features of the present principles, and the manner of attaining them, will become more apparent and the present principles will be better understood by reference to the following description of exemplary embodiments taken in conjunction with the accompanying drawings, wherein

Fig. 1 is a flowchart illustrating use of intra prediction to fill a current block;

Fig. 2 is a pictorial example of splitting a CTU;

Fig. 3 is a pictorial example of scanning blocks in a coding tree unit;

Fig. 4 is a pictorial example of directional modes (2 ...34) for intra prediction in HEVC;

Fig. 5 is a pictorial example of a directional mode in accordance with the present principles wherein selected pixels are included in a line corresponding to the directional mode;

Fig. 6 is a pictorial example of propagation of pixel values in a current block using a linear model based on values of reference pixels that lie along an intra prediction mode direction;

Fig. 7 is a pictorial example illustrating an exemplary HEVC encoder;

Fig. 8 is a pictorial example illustrating example intra predictors, including reference pixels, that surround a current block;

Fig. 9 is a pictorial example illustrating an exemplary HEVC decoder;

Fig. 10a-c are pictorial examples of different models used to derive the predicted pixel values in a current block based on a variation of reference pixel values that lie along an intra prediction mode direction;

Fig. 11 illustrates a block diagram depicting an exemplary system in which various aspects of the exemplary embodiments of the present principles may be implemented.

FIG. 12 illustrates a block diagram depicting an example of a video processing system that may be used with one or more implementations.

FIG. 13 illustrates a block diagram depicting another example of a video processing system that may be used with one or more implementations.

The description set out herein illustrates exemplary embodiments for implementing various aspects of the present principles. Such examples are not to be construed as limiting the scope of the claims in any manner.

DETAILED DESCRIPTION

The present principles relate to an improved apparatus and method for predicting a current block using intra prediction. Intra prediction generally refers to spatial prediction using available samples surrounding the current block. Here, the term current block refers to the block which is to be filled in by the intra prediction. The current block may be of differing size and shape, and are chosen at the encoder side. The set of possible sizes and shapes depend on the particular coding standard used.

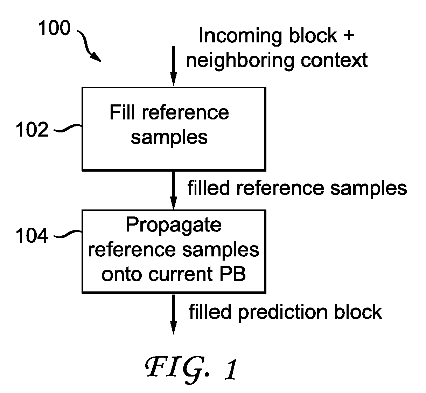

Figure 1 depicts an intra prediction process 100, which contains two main steps: In step 102, the decoder accesses pixel values within a predefined neighboring shape of reference samples. The pixel values of the samples can be accessed by reading from memory previous decoded or reconstructed sample values, or if unavailable, the sample values can be generated by padding. The reference sample values can be filtered, depending on the selected intra mode and the size of the current PB. In step 104, the reference sample values are propagated in the current block according to the selected intra mode.

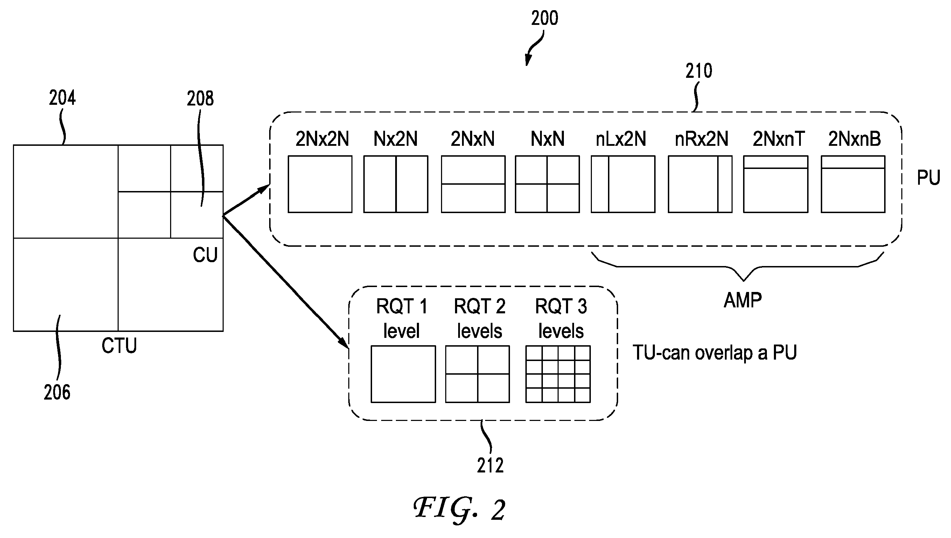

Classically, the reference samples used in intra prediction are located in an L-shaped boundary that is one pixel thick and lie immediately adjacent to the boundary of the current block. Current standards use a quad-tree structure. Figure 2 shows how the main coding structures, called Coding Tree Units 204 (CTU), are split into non-overlapping smaller Coding Units 208 (CU), which are themselves split into two independent structures 210 and 212 for predicting and transforming the signal, namely Prediction Units (PU) and Transform Units (TU)). Each Unit contains the blocks (Coding Tree Blocks (CTB), Coding Block (CB), Prediction Blocks (PB), and Transform Blocks (TB)) for each "color" component.

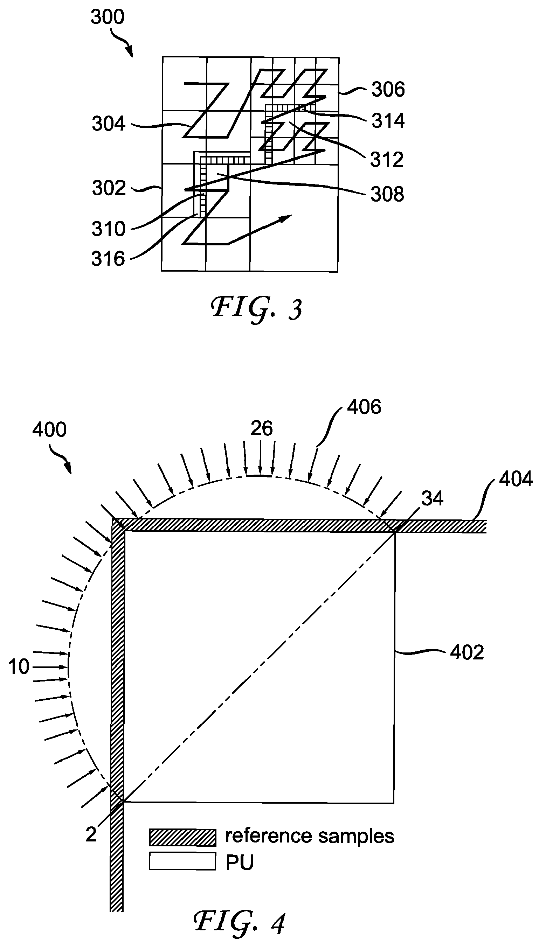

Within the CTU 204, each Coding Unit is scanned. Fig. 3 illustrates an exemplary CTU 300, divided into Coding Units 304, 306 of different sizes, and scanned in the order shown in the scan order 302. Each Coding Unit contains 1, 2 or 4 Prediction Units 308 that are scanned the same way. For each Prediction Block (PB), the available reference samples depend on this order and on the structure depicted in Figure 2. For example, the reference samples 310 are available for the PB 308. The reference samples 314 for PB 312 contain padded values since the part below the current PB 310 are not reconstructed/decoded at the time of predicting 310. However it is possible to extend the thickness of this L-shape of pixels like 316.

Fig. 4 illustrates the intra prediction modes available for the luminance component in HEVC, wherein 35 modes are available as follows. First, there is DC mode, wherein the current block is filled with an average value of reference samples. Second, there is a planar mode which fills the PB with a smooth gradient built from reference samples. Third, there are 33 directional modes, each directional mode corresponding to a direction indicated by a direction arrow, for example direction arrow 406, surrounding current block 402. Starting with direction arrow 2 at the bottom left corner of current block 402, and up to direction arrow 34 at the upper right corner of current block 402, it can be seen that HEVC provides for 33 directional modes in which the reference samples can be propagated.

For current block 402, the intra prediction is based on reference sample layer 404, which is one pixel thick according to HEVC. That is, the width of the reference samples surrounding the current block 402 is one pixel thick. In the cases above, this 1 pixel L-shaped layer is used even if other reconstructed pixels are available. The one pixel L-shape is common to the other main standards, including, for example, H.264/AVC and VP9. In the directional mode the decoder propagates the value of the reference sample on the directional line into each of the pixels along that line in the current block.

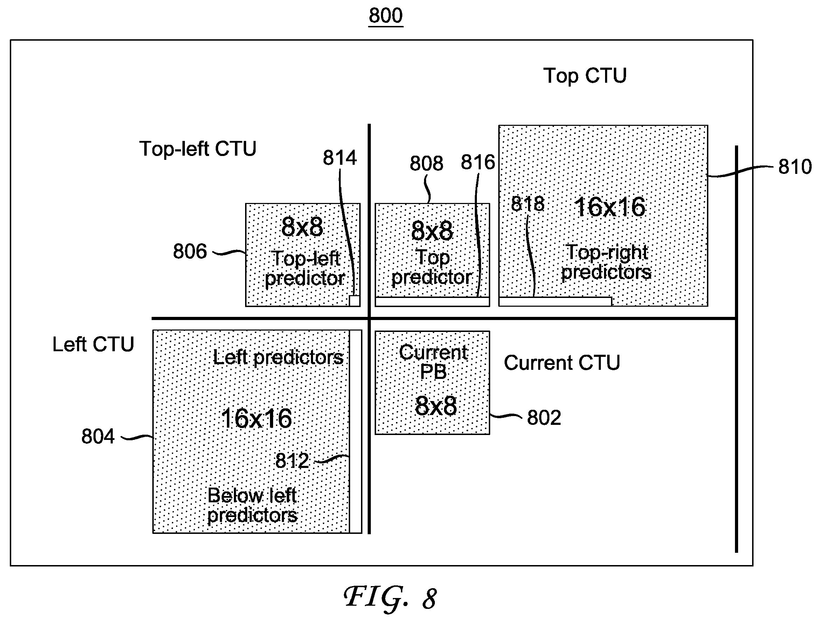

Figure 8 illustrates an arrangement of the current block and the surrounding blocks and reference sample layer. Current block 802 is surrounded by left predictor 804, top left predictor 806, top predictor 808, and top right predictors 810. Based on the surrounding predictors, current block 802 is surrounded by reference sample layers 812, 814, 816 and 818. As known in the art, the size of the predictors may be different as desired. In any event, the reference sample layers surround the current block and lie on the bottom left and top right of the current block to provide necessary sample values for the various modes shown in Fig. 4. All the necessary samples are filled: if some predictors are missing, padding from available samples is performed; and if no predictor is available the median value corresponding the used bit-depth to represent the signal is assigned. In previous arrangements, these reference sample layers are one pixel thick around the current block.

In this regard, we have recognized that using a thicker width of reference samples combined with new intra modes can improve the intra prediction efficiency. An aspect of the present embodiments is in taking advantage of the signal variations around the current block. Taking into account the signal variations around the current block allows the decoder according to the present principle to generate signal variations for pixels along a direction within the current block rather than simply propagating the value of a reference pixel. We propose new intra modes that rely on a thicker width of reference samples to better propagate the signal variations of the neighboring reconstructed region onto the current block to predict and thus obtain a closer prediction of its original values. For example, in HEVC, the smallest "unit" block is 4x4, which means that it is possible to extract a four pixels thick shape of reference pixels without requiring large changes in the processes existing in HEVC. In this regard, the proposed new intra prediction modes comprise a direction that specifies a path along which the reference sample pixels and pixels to be propagating in the current block lie, and a propagation model that specifies the manner in which the values of the pixels are to be propagated in view of the pixels in the reference sample layer.

The present embodiments include directional modes, which may exist in existing codecs. A feature of the present embodiments is that any directions in existing codecs can be considered. Future standards may contain more directions than HEVC since the maximum size of PU will inevitably increase: smaller angle step between two consecutive directions and new directions depending on the scanning order of blocks.

In an embodiment of the present principles, the Bresenham algorithm [4] is used to select the pixels that approximate a straight line determined by the intra angle. Other algorithms to approximate lines on a finite array could be used, such as Wu's algorithm [5] that draws anti-aliased lines. The exemplary embodiment uses the Bresenham algorithm for its low complexity, since this criterion is essential to a tool that is part of a complex decoding and encoding process.

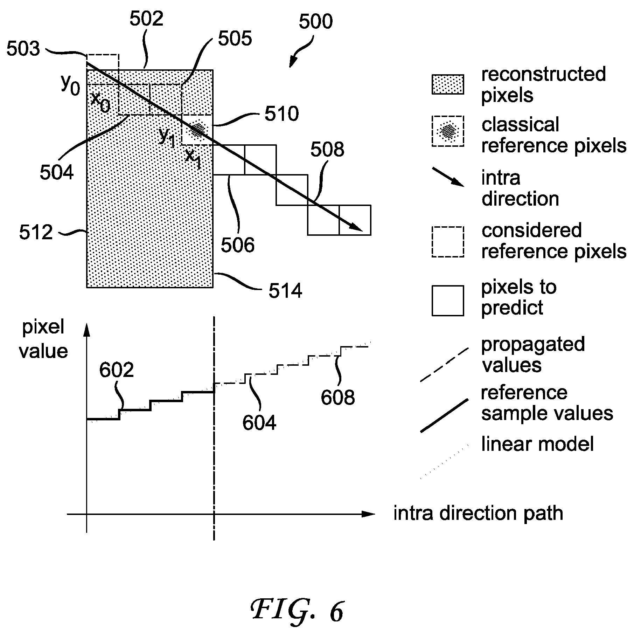

Figure 6 depicts an exemplary embodiment with an example direction, in which the considered reference sample layer is four pixels wide. The current block is bounded by reference numeral 514 and the outer boundary of the reference sample layer is indicated by reference numerals 512. Pixels indicated by reference numeral 503-5, and which lie in the reference sample layer 502 may be used as the reference sample pixels, and pixels 506 within current block boundary 514 are the pixels to be predicted. The reference sample pixel according to prior methods, which would be use by HEVC or VP9 to predict the pixels on the line 508 is marked with a blue disk and indicated by reference numeral 510. According to previous arrangements, the value of pixel 510, or its processed value (filtered), is commonly copied on pixels in the current block. The present principles propose to also take into account the previously reconstructed pixels, indicated by reference numerals 503-5 and 510, to derive a function in order to set the values on the pixels to predict. Additionally, the values of the reference samples can be filtered depending on the intra mode/direction, the size of the block to predict or the type of content detected in this portion of the image. In any event, an aspect of the embodiment is that several reference samples are used to generate predicted values along the pixels along the direction line.

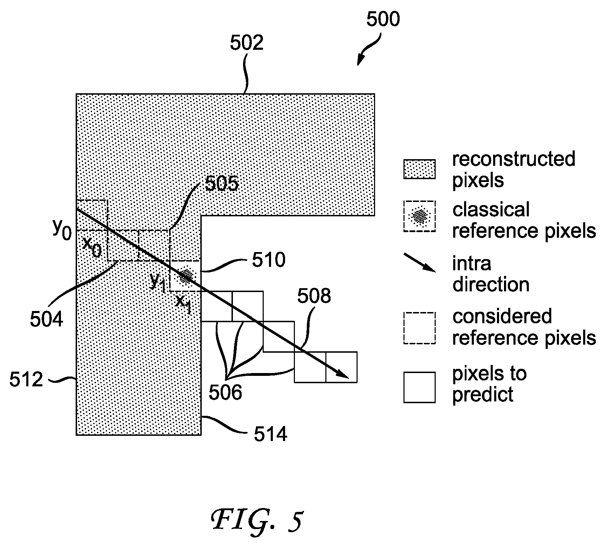

Bresenham's algorithm takes as input the extreme coordinate that delimitate the segment to be estimated. As shown in Fig. 5, if the coordinates $(x_1, y_1)$ denote the coordinates of the first reference pixel on the current directional line. The algorithm requires $(x_o, y_o)$ which are derived using $\theta = \frac{y_1 - y_0}{x_1 - x_0}$, where $\theta$ represents the angle of the selected intra mode and the initialization $x_0 = 0$ or $y_0 = 0$ can be set depending on the slope of the direction, resulting in an resolvable equation with one undetermined variable.

According to the present principles, the intra-prediction mode specifies a direction, as noted above, for a sample layer that includes a width of more than one pixel. According to the present principles, the intra-prediction may also specify a propagation model. The propagation model indicates the manner of generating pixel values in the prediction block along the direction specified. In an exemplary embodiment, we propose a linear model as shown in Figure 6. In this case, values of the pixels that lie in the reference sample layer 502 and along the selected direction line 508 increase linearly along the line. The values of these reference sample pixels are used to derive a linear equation $f(u) = au + b$, where a, resp. b corresponds to the slope, resp. the offset, which are derived from the reference sample pixels. $u$ denotes the pixels along a given path selected by the line algorithm ( e.g. Bresenham). The pixels in the current block is then filled by considering all the parallel lines that cross the current block. Such propagation can result in values outside the range of the possible pixel values. In that case, the saturated values are clipped.

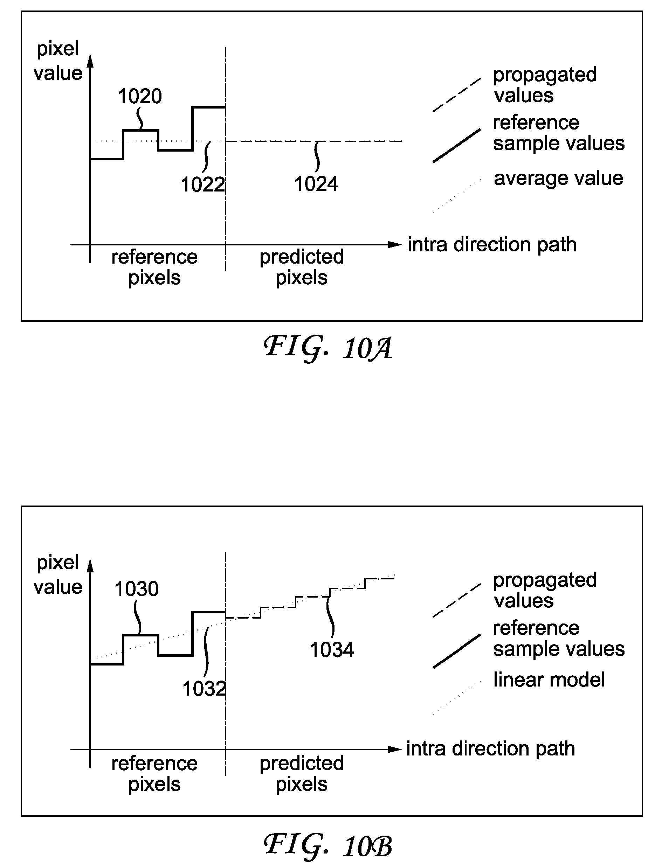

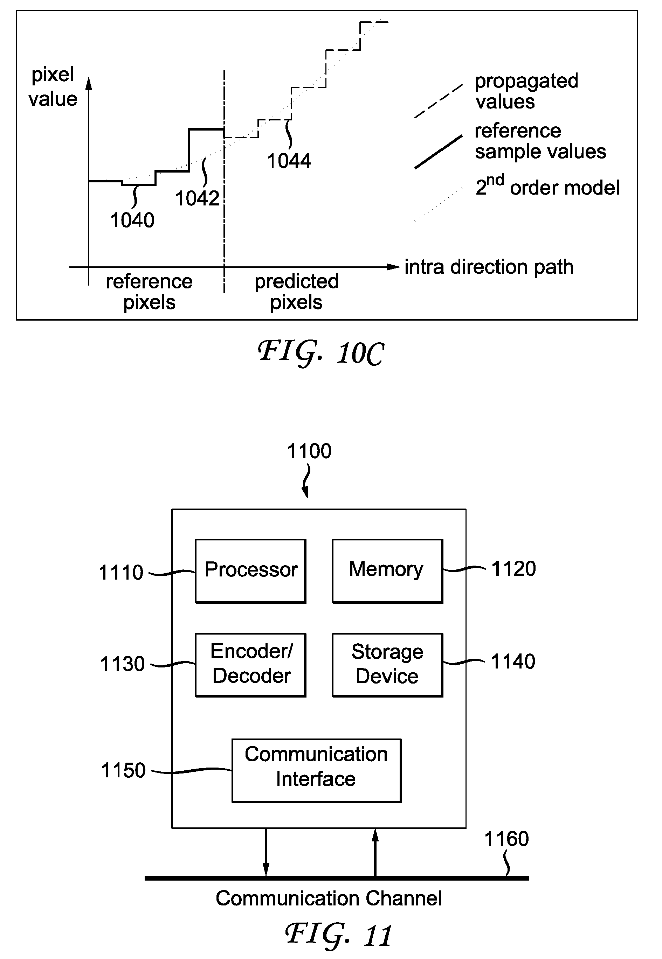

Typically, a linear regression may be applied on the pixel values of the reference samples to determine the slope, the offset being derived from the bordering value of the current block. This process is illustrated in Fig. 10b. In other embodiments of the present principles, different propagation models may be used to derive the predicted values, for example, the values may be derived based on an average value of the reference sample pixels, as shown in Fig. 10a, and the values may be derived based on a second order model as shown in Fig. 10c. Although the values of the pixels are illustrated as increasing in Figures 10 a-c, it is clear that the values may also decrease based on the values of the reference sample pixels and the particular propagation model used. The specific intra-prediction mode is selected by the encoder and data indicative of the selected intra-prediction mode is transmitted to the decoder. The decoder receives a bitstream including the encoded picture and the intra-prediction modes and performs the decoding in response thereto.

In at least one embodiment, the propagation model is fixed (e.g. the linear model). In other embodiments, it is proposed to add a syntax element at one of the following levels (e.g. with the syntax in HEVC): PU/CU/CTU or high level syntax: video (VPS, Video Parameter Set), sequence (SPS, Sequence Parameter Set), picture (SPS, Picture Parameter Set), or slice / slice segment header. This syntax element (e.g. intra_propagation_model) can take values corresponding to the different models proposed or others. It can be set by the user or derived at the encoder side, depending on the content. If the mode is derived at the encoder side, the encoder may, for example, perform an iterative testing to select the particular mode. For example, the encoder may iteratively test for alternative directions in combination with alternative propagation modes to determine which mode will provide the desired level of encoding. The desired level of encoding may depend on, for example, the available bandwidth for transmitting or storing the image or a desired minimal level of visual quality.

The use of the reference sample layer and modes according to the present principles may be signaled in different ways. The new modes can be added to the existing intra prediction modes. They can replace the directional intra modes. The replacement can be signaled at different syntax levels by a flag: sequence level, picture level, and slice level. The thickness of the considered reference pixels shape also needs to be predefined in the codec (e.g. four pixels in HEVC which corresponds to the smallest block size) or signaled in the high-level syntax.

In HEVC, the intra prediction mode is signaled at the CU level syntax. For the luminance component, the mode can be derived by the decoder in two ways, it can be predicted from the spatial neighbors of the current PU, following the so-called Most Probable Mode (MPM) process. The syntax parsed for decoding a CU is detailed in Table 1. Then, for each PU, if the flag prev_intra_luma_pred_flag is equal to 1, the decoder is able to derive the intra mode. If the flag is equal to 0, the syntax element rem_intra_luma_pred_mode. In any case, the IntraPredModeY can take the values INTRA_PLANAR, INTRA_DC, and from INTRA_ANGULAR2 to INTRA_ANGULAR34 as described in Table 2. The MPM process enables to derive the intra mode from 3 possible modes, so rem_intra_luma_pred_mode can be coded using 5 bits. For chroma components, no MPM is used since less modes are available, the syntax element intra_chroma_pred_mode directly signals which mode to use. In case the thickness of the reference samples shape is fixed, the proposed modes could be added to the above list. Table 3 provides an example in which each direction of HEVC has its corresponding proposed mode INTRA_ANGULAR_EXTX. This requires to code the syntax element with more bits or to create an improved MPM process.

Table 1: Coding Unit Syntax in HEVC.

| coding_unit( x0, y0, log2CbSize ) { | Descriptor |
|---|---|
| if( transquant_bypass_enabled_flag) | |
| **cu_transquant_bypass_flag** | ae(v) |
| if( slice_type != I) | |
| **cu_skip_flag**[ x0 ][ y0 ] | ae(v) |
| nCbS = (1 << log2CbSize ) | |
| if( cu_skip_flag[ x0 ][ y0 ]) | |
| prediction_unit( x0, y0, nCbS, nCbS ) | |
| else { | |
| if( slice_type != I) | |
| **pred_mode_flag** | ae(v) |
| if( CuPredMode[ x0 ][ y0 ] != MODE_INTRA ‖ log2CbSize == MinCbLog2SizeY ) | |
| **part_mode** | ae(v) |
| if( CuPredMode [ x0 ] [ y0 ] = = MODE_INTRA ) { | |
| if( PartMode = = PART_2Nx2N && pcm_enabled_flag && log2CbSize >= Log2MinIpcmCbSizeY && log2CbSize <= Log2MaxIpcmCbSizeY ) | |
| **pcm_flag**[ x0 ][ y0 ] | ae(v) |
| if( pcm_flag[ x0 ][ y0 ] ) { | |
| while( !byte_aligned( ) ) | |
| **pcm_alignment_zero_bit** | f(1) |
| pcm_sample( x0, y0, log2CbSize ) | |
| }else{ | |
| pbOffset = ( PartMode = = PART_NxN ) ? ( nCbS / 2 ): nCbS | |
| for( j = 0; j < nCbS; j = j + pbOffset ) | |
| for( i = 0; i < nCbS; i = i + pbOffset ) | |
| **prev_intra_luma_pred_flag**[ x0 + i ][ y0 + j ] | ae(v) |
| for( j = 0; j < nCbS; j = j + pbOffset ) | |
| for( i = 0; i < nCbS; i = i + pbOffset ) | |
| if( prev_intra luma_pred flag[ x0 + i ][ y0 + j ] ) | |
| mpm_idx[ x0 + i ] [ y0 + j ] | ae(v) |
| else | |

(continued)

| | |
|---|---|
| rem_intra_luma_pred_mode[ x0 + i ][ y0 +j ] | ae(v) |
| **intra_chroma_pred_mode**[ x0 ][ y0 ] | ae(v) |
| } | |
| } else { | |
| if( PartMode = = PART_2Nx2N) | |
| prediction_unit( x0, y0, nCbS, nCbS ) | |
| else if( PartMode = = PART_2NxN ) { | |
| prediction_unit( x0, y0, nCbS, nCbS / 2 ) | |
| prediction_unit( x0, y0 + ( nCbS / 2 ), nCbS, nCbS / 2 ) | |
| } else if( PartMode = = PART_Nx2N ) { | |
| prediction_unit( x0, y0, nCbS / 2, nCbS ) | |
| prediction_unit( x0 + ( nCbS / 2 ), y0, nCbS / 2, nCbS ) | |
| } else if( PartMode = = PART_2NxnU ) { | |
| prediction_unit( x0, y0, nCbS, nCbS / 4 ) | |
| prediction_unit( x0, y0 + ( nCbS / 4 ), nCbS, nCbS * 3 / 4 ) | |
| } else if( PartMode = = PART_2NxnD ) { | |
| prediction_unit( x0, y0, nCbS, nCbS * 3 / 4 ) | |
| prediction_unit( x0, y0 + ( nCbS * 3 / 4 ), nCbS, nCbS / 4 ) | |
| } else if( PartMode = = PART_nLx2N ) { | |
| prediction_unit( x0, y0, nCbS / 4, nCbS ) | |
| prediction_unit( x0 + ( nCbS / 4 ), y0, nCbS * 3 / 4, nCbS ) | |
| } else if( PartMode = = PART_nRx2N ) { | |
| prediction_unit( x0, y0, nCbS * 3 / 4, nCbS ) | |
| prediction_unit( x0 + ( nCbS * *3* / 4 ), y0, nCbS / 4, nCbS ) | |
| } else { /* PART_NxN */ | |
| prediction_unit( x0, y0, nCbS / 2, nCbS / 2 ) | |
| prediction_unit( x0 + ( nCbS / 2 ), y0, nCbS / 2, nCbS / 2 ) | |
| prediction_unit( x0, y0 + ( nCbS / 2 ), nCbS / 2, nCbS / 2 ) | |
| prediction_unit( x0 + ( nCbS / 2 ), y0 + ( nCbS / 2 ), nCbS / 2, nCbS / 2 ) | |
| } | |
| } | |
| if( !pcm_flag[ x0 ] [ y0 ] ) { | |
| if( CuPredMode x0 ][ y0 ] != MODE_INTRA && !( PartMode == PART_2Nx2N && merge_flag[ x0 ][ y0 ] ) ) | |
| **rqt_root_cbf** | ae(v) |
| if( rqt_root_cbf) { | |
| MaxTrafoDepth = ( CuPredMode [ x0 ] [ y0 ] = = MODE_INTRA ? (max_transform_hierarchy_depth_intra + IntraSplitFlag ) : max_transform_hierarchy_depth_inter) | |

(continued)

| transform_tree( x0, y0, x0, y0, log2CbSize, 0, 0 ) | |
|---|---|
| } | |
| } | |
| } | |
| } | |

Table 2: Specification of intra prediction mode and associated names

| Intra prediction mode | Associated name |
|---|---|
| 0 | INTRA_PLANAR |
| 1 | INTRA_DC |
| 2..34 | INTRA_ANGULAR2..INTRA_ANGULAR34 |

Table 3: Specification of intra prediction mode, example with proposed modes

| Intra prediction mode | Associated name |
|---|---|
| 0 | INTRA_PLANAR |
| 1 | INTRA_DC |
| 2..34 | INTRA_ANGULAR2..INTRA_ANGULAR34 |
| 35..67 | INTRA_ANGULAR_EXT35..INTRA_ANGULAR_EXT67 |

In the following, the intra prediction in accordance with the present principles are applied in a video encoder and decoder according to HEVC. It should be noted the proposed intra prediction can be used with other video compression standards.

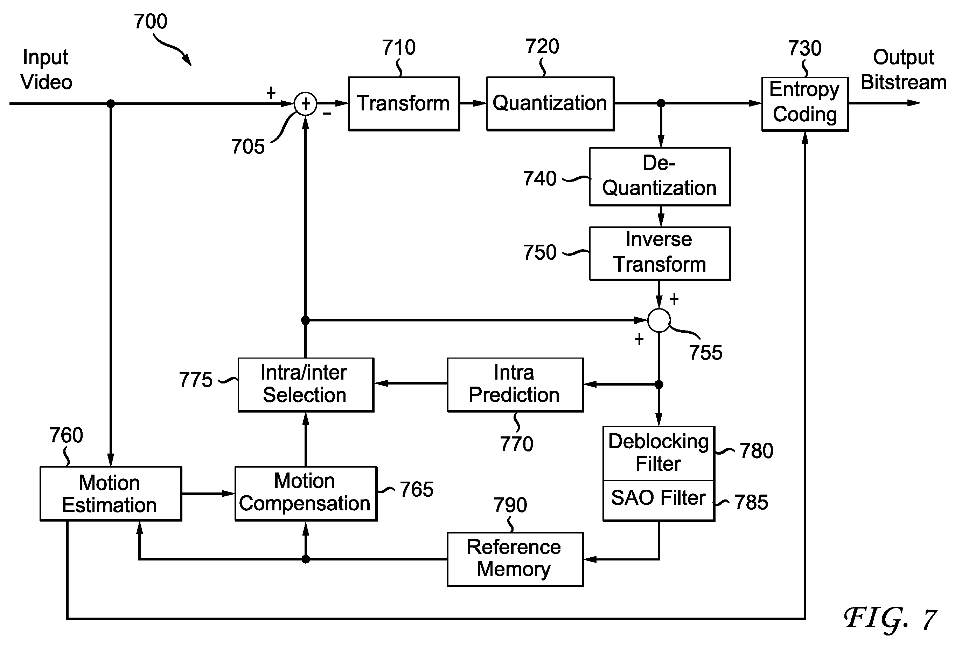

FIG. 7 illustrates an exemplary HEVC encoder 700 wherein the present principles may be applied. The input of encoder 700 includes a video to be encoded. In the exemplary encoder 700, when a block is encoded in an intra mode, it performs intra prediction (770) in accordance with the steps described above. The features of the present principles are incorporated into the processes of intra prediction 770, which may be incorporated in a processor or within a processor that implements various aspects of encoder 700. In an inter mode, the block performs motion estimation (760) and motion compensation (765). The encoder decides which one of the intra mode or inter mode to use for encoding the block (775), and prediction residuals are calculated by subtracting the predicted block from the original image block (705).

The prediction residuals are transformed (710) and quantized (720). The quantized transform coefficients, as well as motion vectors and other syntax elements, are entropy coded (730) to generate a bitstream. The encoder decodes an encoded block to provide a reference for further predictions. The quantized transform coefficients are de-quantized (740) and inverse transformed (750) to decode prediction residuals. Combining the decoded prediction residuals and the predicted block (755), an image block is reconstructed. A de-blocking filter (780) and SAO (Sample Adaptive Offset) filter (785) are applied to the reconstructed block. The filtered image is stored at a reference memory (790).

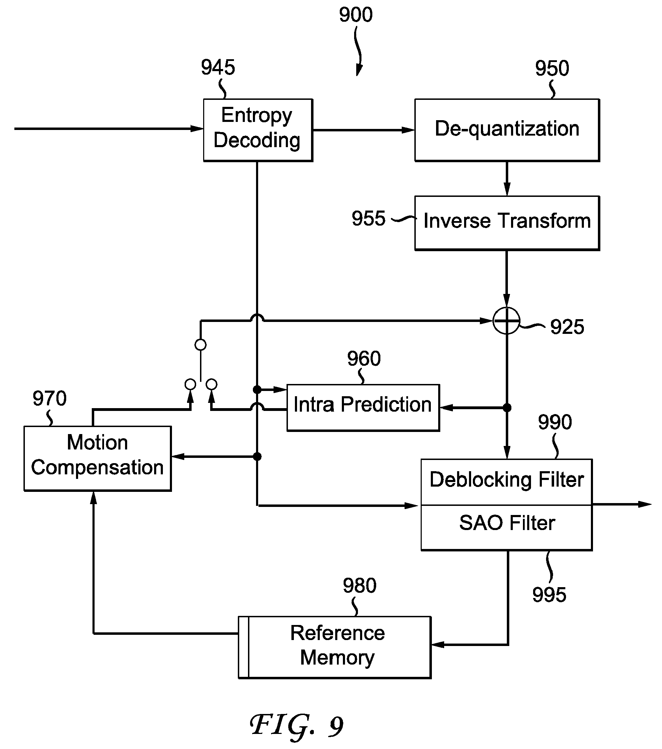

FIG. 9 depicts a block diagram of an exemplary HEVC video decoder 900 wherein the present principles may be applied. The input of decoder 900 includes a video bitstream, which may be generated by video encoder 700. The bitstream is first entropy decoded (945) to obtain transform coefficients, motion vectors, and other coded information. The transform coefficients are de-quantized (950) and inverse transformed (955) to decode the prediction residuals. Combining the decoded prediction residuals and the predicted block (925), an image block is reconstructed. The predicted block may be obtained from intra prediction (960) or motion-compensated prediction (970). The features of the present principles are incorporated into the processes of intra prediction 960, which may be incorporated in a processor or within a processor that implements various aspects of encoder 900. A de-blocking filter (990) and a SAO filter (995) are applied to the reconstructed block or the reconstructed image. The filtered image is stored at a reference memory (980).

FIG. 11 illustrates a block diagram of an exemplary system in which various aspects of the exemplary embodiments of the present principles may be implemented. System 1100 may be embodied as a device including the various components described below and is configured to perform the processes described above. Examples of such devices, include, but are not limited to, personal computers, laptop computers, smartphones, tablet computers, digital multimedia set top boxes, digital television receivers, personal video recording systems, connected home appliances, and servers. System 1100 may be communicatively coupled to other similar systems, and to a display via a communication channel as shown in FIG. 11 and as known by those skilled in the art to implement the exemplary video system described above.

The system 1100 may include at least one processor 1110 configured to execute instructions loaded therein for implementing the various processes as discussed above. Processor 1110 may include embedded memory, input output interface and various other circuitries as known in the art. The system 1100 may also include at least one memory 1120 (e.g., a volatile memory device, a non-volatile memory device). System 1100 may additionally include a storage device 1140, which may include non-volatile memory, including, but not limited to, EEPROM, ROM, PROM, RAM, DRAM, SRAM, flash, magnetic disk drive, and/or optical disk drive. The storage device 1140 may comprise an internal storage device, an attached storage device and/or a network accessible storage device, as non-limiting examples. System 1100 may also include an encoder/decoder module 1130 configured to process data to provide an encoded video or decoded video.

Encoder/decoder module 1130 represents the module(s) that may be included in a device to perform the encoding and/or decoding functions. As is known, a device may include one or both of the encoding and decoding modules. Additionally, encoder/decoder module 1130 may be implemented as a separate element of system 1100 or may be incorporated within processors 1110 as a combination of hardware and software as known to those skilled in the art. Encoder/Decoder module 1130 may, for example, receive data from the communications channel or raw video data to be compressed from a video camera disposed on the device 1100.

Program code to be loaded onto processors 1110 to perform the various processes described hereinabove may be stored in storage device 1140 and subsequently loaded onto memory 1120 for execution by processors 1110. In accordance with the exemplary embodiments of the present principles, one or more of the processor(s) 1110, memory 1120, storage device 1140 and encoder/decoder module 1130 may store one or more of the various items during the performance of the processes discussed herein above, including, but not limited to the HDR video, the bitstream, equations, formula, matrices, variables, operations, and operational logic.

The system 1100 may also include communication interface 1150 that enables communication with other devices via communication channel 1160. The communication interface 1150 may include, but is not limited to a transceiver configured to transmit and receive data from communication channel 1160. The communication interface may include, but is not limited to, a modem or network card and the communication channel may be implemented within a wired and/or wireless medium. The various components of system 1100 may be connected or communicatively coupled together using various suitable connections, including, but not limited to internal buses, wires, and printed circuit boards.

The exemplary embodiments according to the present principles may be carried out by computer software implemented by the processor 1110 or by hardware, or by a combination of hardware and software. As a non-limiting example, the exemplary embodiments according to the present principles may be implemented by one or more integrated circuits. The memory 1120 may be of any type appropriate to the technical environment and may be implemented using any appropriate data storage technology, such as optical memory devices, magnetic memory devices, semiconductor-based memory devices, fixed memory and removable memory, as non-limiting examples. The processor 1110 may be of any type appropriate to the technical environment, and may encompass one or more of microprocessors, general purpose computers, special purpose computers and processors based on a multi-core architecture, as non-limiting examples.

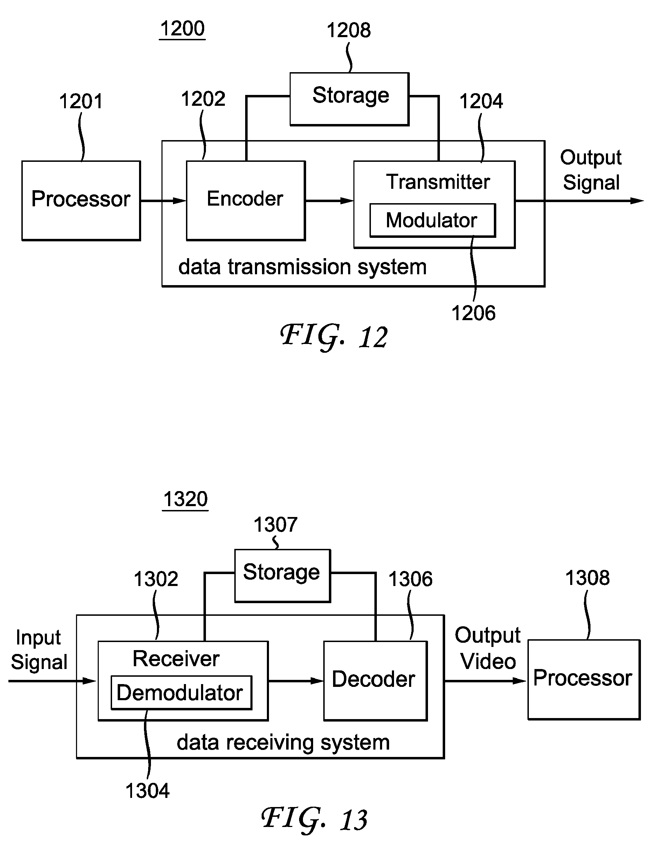

Referring to FIG. 12, a data transmission system 1200 is shown, to which the features and principles described above may be applied. The data transmission system 1200 may be, for example, a head-end or transmission system for transmitting a signal using any of a variety of media, such as, satellite, cable, telephone-line, or terrestrial broadcast. The data transmission system 1200 also may be used to provide a signal for storage. The transmission may be provided over the Internet or some other network. The data transmission system 1200 is capable of generating and delivering, for example, video content and other content.

The data transmission system 1200 receives processed data and other information from a processor 1201. In one implementation, the processor 1201 performs forward conversion. The processor 1201 may also provide metadata to 1200 indicating, for example, the format of the video.

The data transmission system or apparatus 1200 includes an encoder 1202 and a transmitter 1204 capable of transmitting the encoded signal. The encoder 1202 receives data information from the processor 1201. The encoder 1202 generates an encoded signal(s).

The encoder 1202 may include sub-modules, including for example an assembly unit for receiving and assembling various pieces of information into a structured format for storage or transmission. The various pieces of information may include, for example, coded or uncoded video, and coded or uncoded elements. In some implementations, the encoder 1202 includes the processor 1201 and therefore performs the operations of the processor 1201.

The transmitter 1204 receives the encoded signal(s) from the encoder 1202 and transmits the encoded signal(s) in one or more output signals. The transmitter 1204 may be, for example, adapted to transmit a program signal having one or more bitstreams representing encoded pictures and/or information related thereto. Typical transmitters perform functions such as, for example, one or more of providing error-correction coding, interleaving the data in the signal, randomizing the energy in the signal, and modulating the signal onto one or more carriers using a modulator 1206. The transmitter 1204 may include, or interface with, an antenna (not shown). Further, implementations of the transmitter 1204 may be limited to the modulator 1206.

The data transmission system 1200 is also communicatively coupled to a storage unit 1208. In one implementation, the storage unit 1208 is coupled to the encoder 1202, and stores an encoded bitstream from the encoder 1202. In another implementation, the storage unit 1208 is coupled to the transmitter 1204, and stores a bitstream from the transmitter 1204. The bitstream from the transmitter 1204 may include, for example, one or more encoded bitstreams that have been further processed by the transmitter 1204. The storage unit 1208 is, in different implementations, one or more of a standard DVD, a Blu-Ray disc, a hard drive, or some other storage device.

Referring to FIG. 13, a data receiving system 1300 is shown to which the features and principles described above may be applied. The data receiving system 1300 may be configured to receive signals over a variety of media, such as storage device, satellite, cable, telephone-line, or terrestrial broadcast. The signals may be received over the Internet or some other network.

The data receiving system 1300 may be, for example, a cell-phone, a computer, a set-top box, a television, or other device that receives encoded video and provides, for example, decoded video signal for display (display to a user, for example), for processing, or for storage. Thus, the data receiving system 1300 may provide its output to, for example, a screen of a television, a computer monitor, a computer (for storage, processing, or display), or some other storage, processing, or display device.

The data receiving system 1300 is capable of receiving and processing data information. The data receiving system or apparatus 1300 includes a receiver 1302 for receiving an encoded signal, such as, for example, the signals described in the implementations of this application. The receiver 1302 may receive, for example, a signal providing a bitstream, or a signal output from the data transmission system 1200 of FIG. 12.

The receiver 1302 may be, for example, adapted to receive a program signal having a plurality of bitstreams representing encoded pictures. Typical receivers perform functions such as, for example, one or more of receiving a modulated and encoded data signal, demodulating the data signal from one or more carriers using a demodulator 1304, de-randomizing the energy in the signal, de-interleaving the data in the signal, and error-correction decoding the signal. The receiver 1302 may include, or interface with, an antenna (not shown). Implementations of the receiver 1302 may be limited to the demodulator 1304.

The data receiving system 1300 includes a decoder 1306. The receiver 1302 provides a received signal to the decoder 1306. The signal provided to the decoder 1306 by the receiver 1302 may include one or more encoded bitstreams. The decoder 1306 outputs a decoded signal, such as, for example, decoded video signals including video information.

The data receiving system or apparatus 1300 is also communicatively coupled to a storage unit 1307. In one implementation, the storage unit 1307 is coupled to the receiver 1302, and the receiver 1302 accesses a bitstream from the storage unit 1307. In another implementation, the storage unit 1307 is coupled to the decoder 1306, and the decoder 1306 accesses a bitstream from the storage unit 1307. The bitstream accessed from the storage unit 1307 includes, in different implementations, one or more encoded bitstreams. The storage unit 1307 is, in different implementations, one or more of a standard DVD, a Blu-Ray disc, a hard drive, or some other storage device.

The output data from the decoder 1306 is provided, in one implementation, to a processor 1308. The processor 1308 is, in one implementation, a processor configured for performing post-processing. In some implementations, the decoder 1306 includes the processor 1308 and therefore performs the operations of the processor 1308. In other implementations, the processor 1308 is part of a downstream device such as, for example, a set-top box or a television.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus such as, for example, a processor, which refers to processing devices in general, including, for example a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation" of the present principles, as well as other variations thereof, mean that a particular feature, structure, characteristic, and so forth described in connection with the embodiment is included in at least one embodiment of the present principles. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Further, this application or its claims may refer to "accessing" various pieces of information. Accessing the information may include one or more of, for example, receiving the information, retrieving the information (for example, from memory), storing the information, processing the information, transmitting the information, moving the information, copying the information, erasing the information, calculating the information, determining the information, predicting the information, or estimating the information.

Additionally, this application or its claims may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

**Claims**

1. A method of decoding a picture, comprising:

   accessing a bitstream including a prediction block in the picture to be decoded and data indicative of an intra-prediction mode associated with the prediction block;
   accessing a reference sample layer around the prediction block in the picture to be decoded, the reference sample layer having a sample width of at least two pixels; and
   generating pixels within the prediction block based on the intra-prediction mode associated with the prediction block.

2. The method of claim 1, wherein the intra-prediction mode specifies a direction wherein a path of prediction along the direction includes at least two pixels in the reference sample layer.

3. The method of claim 2, wherein the intra-prediction mode further specifies a propagation mode wherein the propagation mode includes at least one of average value, linear model, and a higher order model along the specified direction.

4. The method of claim 2, wherein the intra-prediction mode is based on one of Bresenham and Wu algorithms.

5. The method of claim 2, wherein the reference sample layer has a width corresponding to a width of a smallest block in a video compression standard.

6. A method of encoding a picture, comprising:

   accessing a block in the picture to be intra-prediction encoded;
   selecting an intra-prediction mode for the block based on pixels in the reference sample layer, the intra-prediction being performed using a reference sample layer around the block that is at least two pixels in width;
   generating a bitstream including the encoded picture and data indicative of the selected intra-prediction mode.

7. The method of claim 6, wherein the selected intra-prediction mode specifies a direction wherein a path of prediction along the direction includes at least two pixels in the reference sample layer.

8. The method of claim 7, wherein the selected intra-prediction mode specifies a propagation mode including one of average value, linear model and higher order model along the specified direction.

9. The method of claim 8, wherein the intra-prediction mode is based on one of Bresenham and Wu algorithms.

10. The method of claim 8, wherein the reference sample layer has a width corresponding to a width of a smallest block in a video compression standard.

11. An Apparatus, comprising:

a memory configured to store a picture to be decoded;
a processor , coupled to the memory, and configured to: access a prediction block in the picture to be decoded and data indicative of an intra-prediction mode associated with the prediction block; access a reference sample layer around the prediction block in the picture to be decoded, the reference sample layer having a sample width of at least two pixels; and generate pixels within the prediction block based on the intra-prediction mode associated with the prediction block.

12. An Apparatus, comprising:

a memory configured to store a picture to be encoded;
a processor, coupled to the memory, and configured to access a block in the picture to be intra-encoded, select an intra-prediction mode for the block based on pixels in the reference sample layer, the intra-prediction being performed using a reference sample layer around the block that is at least two pixels in width, and generate a bitstream including the encoded picture and
data indicative of the selected intra-prediction mode.

13. The apparatus of claims 11 or 12, wherein the intra-prediction mode specifies a direction wherein a path of prediction along the direction includes at least two pixels in the reference sample layer.

14. The apparatus of claim 13, wherein the intra-prediction mode further specifies a propagation mode wherein the propagation mode includes at least one of average value, linear model, and a higher order model along the specified direction.

15. The apparatus of claim 14, wherein the reference sample layer has a width corresponding to a width of a smallest block in a video compression standard.

**FIG. 1**

EP 3 148 190 A1

200

210

204    208

2Nx2N    Nx2N    2NxN    NxN    nLx2N    nRx2N    2NxnT    2NxnB    PU

CU

CTU

206

AMP

RQT 1 level    RQT 2 levels    RQT 3 levels

TU-can overlap a PU

212

*FIG. 2*

*FIG. 3*

reference samples
PU

*FIG. 4*

500

502

505

$y_0$

$x_0$

504

$y_1$

$x_1$

510

508

506

512

514

reconstructed pixels

classical reference pixels

intra direction

considered reference pixels

pixels to predict

FIG. 5

*FIG. 6*

FIG. 7

EP 3 148 190 A1

**FIG. 8**

900

945
Entropy
Decoding

950
De-quantization

955 — Inverse Transform

⊕ 925

960
Intra Prediction

970
Motion
Compensation

990
Deblocking Filter

SAO Filter

980
Reference
Memory

995

*FIG. 9*

FIG. 10A

FIG. 10B

pixel
value

propagated
values

reference
sample values

$2^{nd}$ order model

1044

1042

1040

reference
pixels

predicted
pixels

intra direction path

*FIG. 10C*

1100

| Processor | Memory |
| 1110 | 1120 |

| Encoder/ Decoder | Storage Device |
| 1130 | 1140 |

Communication
Interface

1150

1160

Communication Channel

*FIG. 11*

1200    1208

1201    1202    Storage    1204

Processor → Encoder → Transmitter    Output Signal →

Modulator

data transmission system

1206

*FIG. 12*

1320

1307

1302    Storage    1306    1308

Input Signal → Receiver → Decoder → Output Video → Processor

Demodulator

data receiving system

1304

*FIG. 13*

Europäisches
Patentamt

European
Patent Office

Office européen
des brevets

# EUROPEAN SEARCH REPORT

Application Number

EP 15 30 6496

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/005930 A1 (THOMSON LICENSING [FR]) 9 January 2014 (2014-01-09) <br> * figure 5 * <br> * page 5 - page 6 * <br> * page 12 - page 13 * <br> * claims 10, 13 * <br> ----- | 1-15 | INV. <br> H04N19/105 <br> H04N19/176 <br> H04N19/61 <br> H04N19/593 <br> H04N19/136 <br> H04N19/157 <br> H04N19/182 |
| X | WO 2012/175003 A1 (MEDIATEK SINGAPORE PTE LTD [SG]; GUO MEI [CN]; GUO XUN [CN]; HUANG YU-) 27 December 2012 (2012-12-27) <br> * figures 2, 3 * <br> * paragraph [0015] - paragraph [0020] * <br> ----- | 1-15 | |
| X | EP 2 288 163 A2 (LG ELECTRONICS INC [KR]) 23 February 2011 (2011-02-23) <br> * figures 5-8 * <br> * paragraph [0047] - paragraph [0119] * <br> ----- | 1-15 | |
| A | Anonymous: "Bresenham's line algorithm - Wikipedia, the free encyclopedia", <br> , <br> 18 September 2015 (2015-09-18), <br> XP55254494, <br> Retrieved from the Internet: <br> URL:https://en.wikipedia.org/w/index.php?title=Bresenham%27s_line_algorithm&oldid=681673030 <br> [retrieved on 2016-03-02] <br> * the whole document * <br> ----- <br> -/-- | 1-15 | |

TECHNICAL FIELDS SEARCHED (IPC)

H04N

The present search report has been drawn up for all claims

| Place of search | Date of completion of the search | Examiner |
|---|---|---|
| Munich | 2 March 2016 | Morbee, Marleen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 15 30 6496

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Anonymous: "Xiaolin Wu's line algorithm - Wikipedia, the free encyclopedia", <br><br>, <br>16 September 2015 (2015-09-16), <br>XP055254507, <br>Retrieved from the Internet: <br>URL:https://en.wikipedia.org/w/index.php?title=Xiaolin_Wu%27s_line_algorithm&oldid=681395675 <br>[retrieved on 2016-03-02] <br>* the whole document * <br>----- | 1-15 | |

TECHNICAL FIELDS
SEARCHED      (IPC)

The present search report has been drawn up for all claims

| Place of search | Date of completion of the search | Examiner |
|---|---|---|
| Munich | 2 March 2016 | Morbee, Marleen |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

EP 3 148 190 A1

## ANNEX TO THE EUROPEAN SEARCH REPORT
## ON EUROPEAN PATENT APPLICATION NO.

EP 15 30 6496

02-03-2016

| Patent document cited in search report | | | Publication date | Patent family member(s) | | | Publication date |
|---|---|---|---|---|---|---|---|
| WO 2014005930 | A1 | | 09-01-2014 | CN | 104488268 | A | 01-04-2015 |
| | | | | EP | 2870753 | A1 | 13-05-2015 |
| | | | | JP | 2015526004 | A | 07-09-2015 |
| | | | | KR | 20150034144 | A | 02-04-2015 |
| | | | | US | 2015195567 | A1 | 09-07-2015 |
| | | | | WO | 2014005930 | A1 | 09-01-2014 |
| WO 2012175003 | A1 | | 27-12-2012 | CN | 103688533 | A | 26-03-2014 |
| | | | | US | 2014086502 | A1 | 27-03-2014 |
| | | | | WO | 2012175003 | A1 | 27-12-2012 |
| EP 2288163 | A2 | | 23-02-2011 | EP | 2288163 | A2 | 23-02-2011 |
| | | | | EP | 2924994 | A1 | 30-09-2015 |
| | | | | ES | 2541807 | T3 | 24-07-2015 |
| | | | | KR | 20090116655 | A | 11-11-2009 |
| | | | | US | 2011090969 | A1 | 21-04-2011 |
| | | | | WO | 2009136743 | A2 | 12-11-2009 |

EPO FORM P0459

For more details about this annex : see Official Journal of the European Patent Office, No. 12/82